# NEUE EUROPÄISCHE PATENTSCHRIFT

(11) **EP 3 148 369 B2**
(45) Veröffentlichungstag und Bekanntmachung des Hinweises auf die Entscheidung über den Einspruch: **18.11.2020**
(45) Hinweis auf die Patenterteilung: 04.04.2018
(21) Anmeldenummer: 15726121.5
(22) Anmeldetag: 28.05.2015
(51) Int. Cl.: A46B 5/00, A46B 3/04, A46B 13/00, A46B 13/02, B29C 45/16

(54) **KÖRPERPFLEGEBÜRSTE**
BODY CARE BRUSH
BROSSE DE SOIN CORPOREL

(30) Priorität: 30.05.2014 DE 102014008318
(43) Veröffentlichungstag der Anmeldung: 05.04.2017
(73) Patentinhaber: M+C Schiffer GmbH, 53577 Neustadt-Wied (DE)
(72) Erfinder: CLOS, Thomas, 50968 Köln (DE)
(74) Vertreter: Grünecker Patent- und Rechtsanwälte PartG mbB
(86) Internationale Anmeldenummer: PCT/EP2015/061904
(87) Internationale Veröffentlichungsnummer: WO 2015/181329

(56) Entgegenhaltungen:
- WO-A1-2008/121010
- DE-A1- 10 044 031
- DE-A1- 19 857 032
- US-A1- 2012 204 369
- US-A1- 2013 060 176
- US-B1- 6 178 582

## Beschreibung

Die vorliegende Erfindung betrifft eine Körperpflegebürste mit den oberbegrifflichen Merkmalen von Anspruch 1. Eine solche Körperpflegebürste ist aus der WO 2008/121010 A1 bekannt.

Im Stand der Technik ist beispielsweise eine Gesichtsreinigungsbürste mit einem Griffkörper und einem auswechselbaren Bürstenkopf bekannt, der durch einen Borstenbündel tragenden Reinigungselementträger gebildet wird. Diese Gesichtsreinigungsbürste weist einen elektrischen Antrieb auf, der den Bürstenkopf antreibt. Der Bürstenkopf übt im elektrischen Betrieb eine Kombinationsbewegung aus Vibration und Rotation aus und löst dabei Schmutz, tote Hautzellen und Make-up-Rückstände von der Haut ab.

Des Weiteren sind im Stand der Technik beispielsweise elektrisch betriebene Zahnbürsten bekannt, an deren Bürstenkopf ein Reinigungselementträger mit Reinigungselementen vorgesehen ist, der zur Zahnreinigung in Rotations- bzw. Oszillationsbewegung versetzt wird.

Sowohl bei den zuvor beschriebenen Gesichtspflegebürsten als auch bei bekannten Zahnbürsten sowie üblicherweise bei allen Typen von Körperpflegebürsten ist es ein Bedürfnis, auch schwer zugängliche Körperregionen bzw. Körperregionen mit einer unebenen Kontur der Körperoberfläche möglichst effizient reinigen zu können.

Aus der DE 100 44 031 A1 ist eine Körperpflegebürste in Form einer Zahnbürste mit zwei halbkreisförmigen Reinigungselementträgerteilen bekannt, die gegenüber einer Basis verschwenkbar um eine starre Achse gelagert sind. Dazu können die Reinigungselementträgerteile entweder über diese Verschwenkachse unmittelbar miteinander verschwenkbar gekoppelt und mit der Basis verschwenkbar sein oder aber jeweils für sich mit der Basis gekoppelt. Die Schwenkachse kann mit einem Federelement gekoppelt sein, sodass bei einer Schwenkbewegung aufgrund einer äußeren Kraft eine Rückstellung erfolgt. Die Ausgestaltung ist insgesamt sehr aufwendig. Zum anderen ist ein erheblicher Platzbedarf notwendig, da ein die Schwenkachse ausbildender Achskörper unterhalb der beiden Reinigungselementträgerteile vorgesehen ist. Die Ausgestaltung bedingt im Übrigen eine Beschränkung auf zwei Reinigungselementträgerteile an einem Bürstenkopf.

Die DE 103 26 155 A1 offenbart eine Zahnbürste mit mehreren auf einen elastomeren Kissen eines Bürstenkopfes einer Zahnbürste angeordneten Reinigungselementträgerteilen, die jeweils mit Abstand zu einander vorgesehen sind. Das elastomere Kissen erlaubt eine gewisse Verschwenkbewegung der Reinigungselementträgerteile relativ zu einander. Das Kissen befindet sich unterhalb der Reinigungselementträgerteile.

Die DE 103 26 155 A1 offenbart eine Zahnbürste mit mehreren auf einen elastomeren Kissen eines Bürstenkopfes einer Zahnbürste angeordneten Reinigungselementträgerteilen, die jeweils mit Abstand zu einander vorgesehen sind. Das elastomere Kissen erlaubt eine gewisse Verschwenkbewegung der Reinigungselementträgerteile relativ zu einander. Das Kissen befindet sich unterhalb der Reinigungselementträgerteile.

Aufgabe der vorliegenden Erfindung ist deshalb, eine Körperpflegebürste bereitzustellen, die eine verbesserte Reinigungswirkung gewährleistet.

Das zuvor beschriebene Problem wird mit einer Körperpflegebürste mit den Merkmalen von Anspruch 1 gelöst.

Die erfindungsgemäße Körperpflegebürste grenzt sich dadurch vom Stand der Technik ab, dass ein mehrteiliger, also zumindest zweiteiliger Reinigungselementträger vorgesehen ist, wobei jedes Teil eines Reinigungselementträgers, also jedes Reinigungselementträgerteil an einem Basisteil beweglich gelagert aufgehängt ist.

Bei Aufsicht auf eine reinigungselementseitige Oberfläche des Reinigungselementträgers (im Folgenden Aufsicht) ist der Basisteil im Wesentlichen mittig, d.h. zentral angeordnet.

Mit diesem Basisteil sind die Reinigungselementträgerteile gekoppelt. Diese Kopplung wird über ein Rückstellmittel geleistet, welches die einzelnen Reinigungselementträgerteile, nach Absetzen der Bürste vom Körper wieder in die ursprüngliche Stellung zueinander bringt. In diese Ausgangsstellung werden beispielsweise die Reinigungselementträgerteile durch elastische Rückstellung gebracht, nachdem sie beispielsweise bei Benutzung der Bürste körperkonturabformend verschwenkt worden sind, um an einer vorgegebenen Körperkontur vorbeigeführt werden zu können.

Vorzugsweise weist der Reinigungselementträger in der Ausgangsstellung in Aufsicht eine im Wesentlichen planare Oberfläche auf, wobei die einzelnen den Reinigungselementträger bildenden Reinigungselementträgerteile im Wesentlichen auf ihrer reinigungselementseitigen Oberfläche versatzfrei zueinander angeordnet sind. Erfindungsgemäß ist das Rückstellmittel zwischen den Reinigungselementträgerteilen vorgesehen, was regelmäßig bedingt, dass das Rückstellmittel zur Rückstellung einer Verschwenkbewegung der Reinigungselementträgerteil als Reaktion auf eine äußere, auf die Reinigungselemente wirkende Kraft, zwischen einer von den Reinigungselementen durchragten Oberfläche der Reinigungselementträgerteile und einer sich üblicherweise parallel hierzu erstreckenden Unterseite befindet.Dabei kann das Rückstellmittel zusätzlich die Unterseite überragen, um die Reinigungselementträgerteile mit einem mit Abstand zu dieser Unterseite vorgesehenen Basisteil zu verbinden. Im Hinblick auf eine möglichst platzsparende Ausgestaltung befindet sich indes das Rückstellmittel ausschließlich oder zumindest überwiegend in Zwischenräumen zwischen benachbarten Reinigungselementträgerteilen. In diesen Zwischenräumen ist üblicherweise zumindest 60, bevorzugt zumindest 70 % eines elastischen Kunststoffs vorgesehen, der das Rückstellmittel einheitlich ausbildet und bevorzugt dieses Rückstellmittel mit dem Basisteil verbindet. Alternativ kann es in Abhängigkeit der vorgesehen Verwendung auch vorteilhaft sein, dass der Reinigungselementträger in Ausgangsstellung konvex oder konkav ausgebildet ist. Hierbei sind vorteilhafterweise einzelne planar ausgeführte Reinigungselementträgerteile schon in Ausgangsstellung verkippt an dem Rückstellmittel befestigt. Alle oder einige Reinigungselemente bildende Borstenbündel stehen vorzugsweise in der Ausgangsstellung parallel zueinander und parallel zu einer zentralen Rotationsmittelachse. Die Borstenbündel sind vorzugsweise an deren reinigungsseitigen Enden derart konturiert bzw. abgeschrägt, dass sie eine konvexe bzw. konkave Hüllfläche bilden, die nicht von einzelnen reinigungsseitigen Enden überragt wird.

Bei Einsatz der Bürste am Körper bewegen sich, insbesondere verkippen die einzelnen Reinigungselementträgerteile üblicherweise sowohl in vertikaler Richtung zur reinigungsseitigen Oberfläche, d.h. in einer Zentralrichtung des Reinigungselementträgers als auch innerhalb der in der Ausgangsstellung gebildeten reinigungselementseitigen Oberfläche. Im Wesentlichen verkippen die einzelnen Reinigungselementträgerteile also der Kontur der zu reinigenden Körperregion folgend während die Bürste an dieser Körperregion angedrückt wird.

Jegliches Mittel, das eine Rückstellung, insbesondere eine Verkippung in vertikaler Richtung zur Reinigungsoberfläche als auch in horizontaler Richtung zur Reinigungsoberfläche erlaubt, kann als Rückstellmittel gesehen werden.

Erfindungsgemäß wird das Rückstellmittel durch ein elastisches Kunststoffteil gebildet; bevorzugt ist das Rückstellmittel lediglich ein elastisches Kunststoffteil, welches eine Verbindung zwischen dem Basisteil und dem jeweiligen Reinigungselementträgerteil bildet. Insbesondere sind bevorzugt alle zueinander beweglich vorgesehenen Reinigungselementträgerteile an demselben einheitlichen elastischen Kunststoffteil befestigt.

Das elastische Kunststoffteil befindet sich üblicherweise zwischen den Reinigungselementträgerteilen. Bei einer bevorzugten Weiterbildung erstreckt sich das elastische Kunststoffteil bis zu der von den Reinigungselementen durchragten Oberfläche der Reinigungselementträgerteile und ist bevorzugt bündig mit dieser Oberfläche vorgesehen. Dabei erstreckt sich das elastische Kunststoffteil radial, d.h. von einer Drehachse, die üblicherweise die Symmetrieachse in Bezug auf die Oberflächengestaltung der Reinigungselementträger bildet, weniger weit als die Reinigungselementträgerteile. Das elastische Kunststoffteil erstreckt sich üblicherweise nicht mehr als 25 % der radialen Erstreckung der Reinigungselementträgerteile von dieser Drehachse. Bevorzugt erstreckt sich der elastische Kunststoff von der Oberfläche der Reinigungselementträgerteile bis zu deren Unterfläche. So ergibt sich an der den Reinigungselementen gegenüberliegenden Unterseite der Reinigungselementträgerteile und des Rückstellmittels eine plane ebene Oberfläche, die lediglich von einem Basisteil überragt ist, welches aus einer Hartkomponente, insbesondere PP oder PE gebildet wird. Der Übergang zwischen dem Basisteil und dieser Unterseite der Reinigungselementträgerteile mit dem Rückstellmittel erfolgt üblicherweise über einen Durchmessersprung. Das Basisteil hat regelmäßig einen Anschlussflansch sowie einen daran vorgesehenen scheibenartigen Flansch, der stoffschlüssig mit dem Rückstellmittel verbunden ist. Dieses Rückstellmittel ist üblicherweise zusammen mit dem scheibenartigen Flansch zylindrisch ausgeformt. Dieser Zylinder schließt an die Einheit aus Rückstellmittel und Reinigungselementträgerteil an.

Vorzugsweise wird für den elastischen Kunststoff ein thermoplastisches Elastomer (TPE) mit einer Shore A Härte zwischen 10 und 100, besonders bevorzugt zwischen 20 und 70, ganz besonders bevorzugt zwischen 20 und 30 oder alternativ bevorzugt zwischen 30 und 50 verwendet. Das elastische Kunststoffteil ist demnach vorzugsweise in Seitenansicht des Bürstenkopfes zwischen dem Basisteil und der reinigungselementseitigen Oberfläche vorgesehen und in Aufsicht zwischen zumindest zwei Reinigungselementträgerteilen. Dies schließt jedoch nicht aus, dass das verwendete Kunststoffmaterial auch leicht die reinigungselementseitige Oberfläche in Seitenansicht überragt. Mittig heißt, dass zumindest der Masseschwerpunkt des elastischen Kunststoffteils zwischen dem Basisteil und der reinigungselementseitigen Oberfläche liegt.

Gemäß einer bevorzugten Weiterbildung der Erfindung ist das elastische Kunststoffteil an die Reinigungselementträgerteile angespritzt.

Verfahrensmäßig werden die Reinigungselementträgerteile, nach dem Sie vorzugsweise mittels Spritzgusstechnologie in einer Reinigungselementträgerteil-Spritzgusseinrichtung hergestellt sind, zunächst in einer Anspritzeinrichtung in der gewünschten Anordnung der fertigen Bürste zueinander positioniert. Die so zunächst vorläufig zu einem Reinigungselementträger vorpositionierten Reinigungselementträgerteile werden mittels elastischem Kunststoffmaterial unter Bildung des elastischen Kunststoffteils hinter/vor/bzw. umspritzt, d.h. mittels eines Spritzgussverfahrens wird zunächst flüssiges Kunststoffmaterial an die Reinigungselementträgerteile angespritzt, welches sich verfestigt und die einzelnen Reinigungselementträgerteile danach zumindest kraftschlüssig, bevorzugt auch in drei Richtungen formschlüssig hält.

Ganz besonders bevorzugt wird während der Herstellung der Reinigungselementträgerteile in der Reinigungselementträgerteil-Spritzgusseinrichtung in einer Basisteil-Spritzgusseinrichtung insbesondere zumindest teilweise simultan, also gleichzeitig, das Basisteil durch Spritzgießen hergestellt. Anschließend werden in einer Anspritzeinrichtung die Reinigungselementträgerteile und das Basisteil unter Herstellung des elastischen Kunststoffteils miteinander verbunden.

Gemäß einer bevorzugten Weiterbildung der Erfindung sind die Reinigungselementträgerteile als kuchenstückartige Einheiten vorzugsweise gleichgroß ausgebildet und bilden in deren Gesamtheit einen im Wesentlichen runden, d.h. kreisförmigen Reinigungselementträger aus.

Der Reinigungselementträger ist im Wesentlichen symmetrisch (spiegelsymmetrisch oder punktsymmetrisch) ausgeführt. Eine kreisbogensegmentförmige Grundfläche einer einzelnen kuchenstückartigen Einheit in diesem Sinne ist auch dann gegeben, wenn in Aufsicht einzelne Spitzen, insbesondere zum Zentrum zeigende Spitzen der Reinigungselementträgerteile abgeflacht bzw. abgerundet sind. Bei Aufsicht soll die Hüllfläche jedes einzelnen Reinigungselementträgers im Wesentlichen nach Art eines Kreissegments gebildet sein.

Vorzugsweise sind zwischen drei und acht Reinigungselementträgerabteile vorgesehen. Die Reinigungselementträgerteilesind vorzugsweise identisch ausgebildet. Es kann eine gerade Anzahl an Reinigungselementträgerteilen vorgesehen sein, insbesondere sechs, acht oder zwölf gleichartige Reinigungselementträgerteile, die den Reinigungselementträger bilden.

Vorzugsweise wird bei Aufsicht im Zentrum des kreisförmigen Reinigungselementträgers ein zylindrischer, insbesondere kreisförmiger Freiraum gelassen, der zumindest teilweise mit dem das Rückstellmittel bildenden elastischen Kunststoffteil ausgefüllt ist und im Wesentlichen oberflächenbündig mit der reinigungselementseitigen Oberfläche abschließt.

Die einzelnen Reinigungselementträgerteile sind über einen Zwischenraum voneinander beabstandet. Insbesondere sind die Zwischenräume zwischen sämtlichen den Reinigungselementträger bildenden Reinigungselementrägerteilen im Wesentlichen gleich breit ausgebildet. Da der Reinigungselementträger von Reinigungselementträgerteilen mit einer kreissegmentförmigen Grundfläche gebildet wird, ist das Zwischenraummuster in Aufsicht insbesondere nach Art eines symmetrischen Sterns ausgebildet. Die Zwischenräume zwischen den einzelnen Reinigungselementträgerteilen gewährleisten, dass bei der konturabformenden Bewegung, insbesondere der Verkippung innerhalb der in der Ausgangsstellung gebildeten reinigungselementseitigen Oberfläche sich einander benachbarte Kanten der Reinigungselementträgerteile nicht gegenseitig berühren.

Erfindungsgemäß sind alle Zwischenräume mit einem elastischen Kunststoffmaterial ausgefüllt. Diese Füllung erstreckt sich teilweise radial nach außen. Erfindungsgemäß wird die zuvor genannte Füllung von sternförmig von dem elastischen Kunststoffteil abgehenden Armen gebildet, die in den Zwischenräumen zwischen den Reinigungsträgerelementträgerteilen ragen. Die Arme erstrecken sich in radialer Richtung nach außen und füllen in der Aufsicht zwischen 10 und 50 %, insbesondere zwischen 10 und 30, bevorzugt zwischen 10 und 40 des Zwischenraumes auf. Ganz besonders bevorzugt ist, dass die Arme in Aufsicht auf das Zentrum zwischen einem Viertel und einem Drittel des Zwischenraumes ausfüllen. Für den Fall, dass alle Zwischenräume zwischen den einzelnen Reinigungselementträgerteilen von dem elastischen Kunststoff ausgefüllt sind, weist der Reinigungselementträger als Ganzes eine erhöhte Steifigkeit und Rückstellwirkung auf.

Insbesondere ist der elastische Kunststoff für die Füllung aus dem gleichen elastischen Kunststoffmaterial wie das Rückstellmittel. Insbesondere bildet der der Zwischenräume ausfüllende Kunststoff mit dem elastischen Kunststoffteil, welches das Rückstellmittel bildet, ein einheitliches Bauteil aus, d.h. wird vorzugsweise insgesamt während des Spritzgießens hergestellt.

Einzelne oder alle Reinigungselementträgerteile sind vorzugsweise aus einem im Verhältnis zu dem elastischen Kunststoffmaterial harten Material ausgebildet, insbesondere Hartplastik wie PP (Polypropylen), POM (Polyoxymethylen), PBT (Polybutylenterephthalat) oder PC (Polycarbonat). Gleiches gilt für das Basisteil. Insbesondere bevorzugt ist es, das Basisteil aus einer anderen Komponente als die Reinigungselementträgerteile herzustellen. So wird die Körperpflegebürste bevorzugt zumindest in einem Zwei-Komponenten-Spritzgussverfahren vorzugsweise in einem Drei- oder Mehrkomponentenverfahren hergestellt.

Als Reinigungselemente werden nach der vorliegenden Erfindung vorzugweise einzelne TPE-Elemente bzw. Borstenbündel verstanden, die jeweils für sich allein an den einzelnen Reinigungselementträgerteilen vorgesehen sein können oder in Kombination jeweils mit der anderen Art der Reinigungselemente (d.h. zumindest eines, vorzugsweise alle Reinigungselementträgerteile tragen TPE und/oder Borstenbündel). Jedes Reinigungselementträgerteil kann ein oder mehrere Reinigungselemente tragen.

Für den Fall, dass TPE-Reinigungselemente vorgesehen sind, ist es vorteilhaft, diese aus demselben Kunststoff wie das elastische Kunststoffteil (Rückstellmittel) auszubilden. Ferner ist es vorteilhaft, diese Reinigungselemente im Zuge eines einzigen Spritzgießschrittes während des Anspritzens und Bildung des Rückstellmittels zu bilden.

Sollten als Reinigungselemente zumindest zum Teil Borstenbündel verwendet werden, sollten diese entweder mittels eines Ankers in an den Reinigungselementträgerteilen vorgesehenen Öffnungen befestigt sein oder aber alternativ im Zuge der Herstellung des Reinigungselementträgerteils selber schon direkt an diesem umspritzt gehalten hergestellt worden sein.

Im letzteren Fall ist, das Reinigungselementträgerteil in Seitenansicht im Vergleich zur Befestigung der Borstenbündel mittels Anker dünn ausgebildet.

In dem Fall, dass die Reinigungselemente mittels Anker in dem Reinigungselementträgerteil befestigt sind, wird in einem ersten Spritzgussschritt zuerst das Reinigungselementträgerteil mit schon vorgefertigten Reinigungselementaufnahmeöffnungen hergestellt, in die dann nachfolgend die Borstenbündel gestopft werden und mittels Anker in diesen befestigt werden. Das Befestigen der Borstenbündel mittels Anker kann sowohl nach Verbinden der Reinigungselementträgerteile mit dem Rückstellmittel, als auch davor durchgeführt werden.

Beim direkten Umspritzen der befestigungsseitigen Enden der Borstenbündel wird das Reinigungselementträgerteil in einer Kavität hergestellt, in welche schon die einzelnen Borstenbündel an den später vorgesehenen Positionen innerhalb des Reinigungselementträgerteils hineinragen. In diesem Fall wird unmittelbar nach dem Spritzgussschritt zur Herstellung des Reinigungselementträgerteils eine Reinigungselementträgerteil-Reinigungselement-Einheit erhalten.

Bei der erfindungsgemäßen Körperpflegebürste handelt es sich vorzugsweise um eine elektrisch betriebene Bürste, bei der der komplette Bürstenkopf, zumindest jedoch der Reinigungselementträger mit dem Rückstellmittel und dem daran gekoppelten Basisteil als eine Einheit auswechselbar ist. Hierzu ist an dem Basisteil vorzugsweise eine Nabe zur Aufnahme einer Antriebswelle vorgesehen, durch die der Reinigungselementträger angetrieben ist.

Alternativ betrifft die Erfindung aber auch eine manuelle Körperpflegebürste, insbesondere ohne jegliche elektrische Steuerung des Bürstenkopfes. Soweit es sich um eine manuelle Bürste handelt, entsteht die konturabformende Bewegung der Reinigungselementträgerteile durch Druck, der vom Nutzer auf den Reinigungselementträger ausgeübt wird, während die Bürste an der Körperoberfläche entlang geführt wird. Insbesondere hat eine solche manuelle Körperpflegebürste einen Griffstiel, der einteilig in den Bürstenkopf übergeht. Der Griffstiel ist üblicherweise massiv, aus Kunststoff spritzgegossen und einteilig mit dem Basisteil verwirklicht.

Vorzugsweise ist der Reinigungselementträger über das Basisteil derart an den Elektroantrieb der Bürste gekoppelt, dass der Reinigungselementträger eine Rotations- und/oder Oszillationsbewegung durchführt.

Sowohl für die Oszillationsbewegung als auch für die Rotationsbewegung wird jeweils auf die Bewegung innerhalb einer reinigungselementseitigen Fläche abgestellt.

Vorzugsweise handelt es sich bei der erfindungsgemäßen Bürste um eine Gesichtspflegebürste. Diese zeichnet sich insbesondere durch einen im Verhältnis zu einer Zahnbürste in Aufsicht zumindest in einer Richtung innerhalb der reinigungselementseitigen Oberfläche größeren Durchmesser des Reinigungselementträgers aus. Vorzugsweise ist der Durchmesser des Reinigungselementträgers größer als 20 mm, besonders bevorzugt größer als 25 mm, insbesondere größer als 30 mm. Da es sich vorzugsweise um eine Bürste zur Gesichtspflege handelt, beträgt der Außendurchmesser des Reinigungselementträgers in der Regel nicht mehr als 100 mm.

Des Weiteren betrifft die Erfindung ein Verfahren zur Herstellung einer Körperpflegebürste mit den Merkmalen von Anspruch 8.

Weitere bevorzugte Verfahrensschritte sind in Bezug auf die zuvor beschriebene Körperpflegebürste erläutert. Vorzugsweise werden die Reinigungselementträgerteile und das Basisteil gleichzeitig in unterschiedlichen Spritzgussformen hergestellt. Insbesondere werden die Reinigungselementträgerteile und das Basisteil aus unterschiedlichen Hartkunststoffkomponenten hergestellt. Diese in den beiden Spritzgussformen hergestellten Komponenten werden dann zu einem Bürstenkopfensemble vorpositioniert und dann mittels elastischen Kunststoffs in einem weiteren Schritt durch Spritzgießen miteinander verbunden. Hierbei wird das elastische Kunststoffteil gebildet, welches vorzugsweise das Basisteil und die Reinigungselementträgerteile miteinander verbindet.

Bei dem erfindungsgemäßen Herstellungsverfahren werden alternativ vorzugsweise einteilig durch Spritzgießen an dem Basisteil spritzgegossen. Dabei werden üblicherweise zwischen einzelnen Reinigungselementträgerteilen und/oder dem Basisteil Stege belassen. Ein solcher Grundkörper wird üblicherweise aus der Hartkomponente gebildet und als Einheit in eine größere Spritzgießform umgesetzt, in welcher ein elastischer Kunststoff zwischen die Reinigungselementträgerteile bzw. zwischen diese und das Basisteil eingespritzt wird. Sofern die Behinderung durch den Steg der Hartkomponente zwischen den einzelnen Teilen unerwünscht ist, kann dieser Steg vor dem Umspritzen geschert werden, so dass die Reinigungselementträgerteile miteinander bzw. mit dem Basisteil lediglich über den elastischen Kunststoff, d.h. in der Regel den thermoplastischen Elastomer, verbunden sind. Eine leichtere Handhabung und Fertigung wird allerdings dadurch erreicht, dass besagte Stege in dem Bauteil belassen und von dem elastischen, vorzugsweise weichelastischen Kunststoff umhüllt werden, so dass sie die Erscheinungsform des fertigen Erzeugnisses nicht beeinflussen.

Das elastische Kunststoffteil kann einteilig Reinigungselemente ausbilden, die von dem elastischen Kunststoffteil abragen und dementsprechend zwischen den Reinigungselementträgerteilen vorgesehen sind. Die Reinigungselementträgerteile werden vorzugsweise nach der spritzgießtechnischen Herstellung mit Borstenbündeln bestopft, welche in an den Reinigungselementträgerteilen ausgesparte Reinigungselementaufnahmeöffnungen eingebracht werden, die an den Reinigungselementträgerteilen ausgespart sind. Üblicherweise hat jedes Reinigungselementträgerteil mehrere solcher Aufnahmeöffnungen, in welchen ein Borstenbündel mit einem Anker gehalten ist.

Bevorzugte Weiterbildungen und Vorteile der Erfindungen ergeben sich aus der nachfolgenden Beschreibung eines Ausführungsbeispiels in Verbindung mit der Zeichnung. In dieser zeigen:

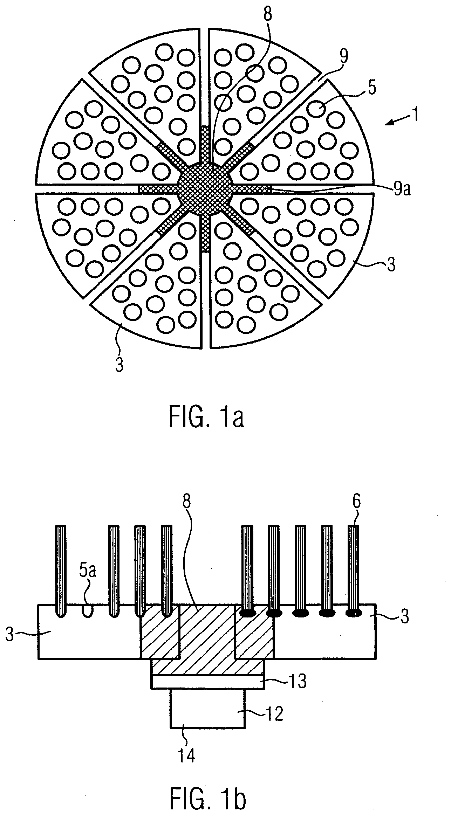

- Figur 1a: eine schematische Draufsicht auf einen Bürstenkopf einer Gesichtspflegebürste;
- Figur 1b: eine schematische Seitenansicht des Ausführungsbeispiels gemäß Figur 1a in nicht an einer zu reinigenden Fläche anliegendem Zustand (Ausgangsstellung), wobei die beiden dargestellten Reinigungselementträgerteile mittels unterschiedlichen Verfahren mit Reinigungselementen bestückt sind;

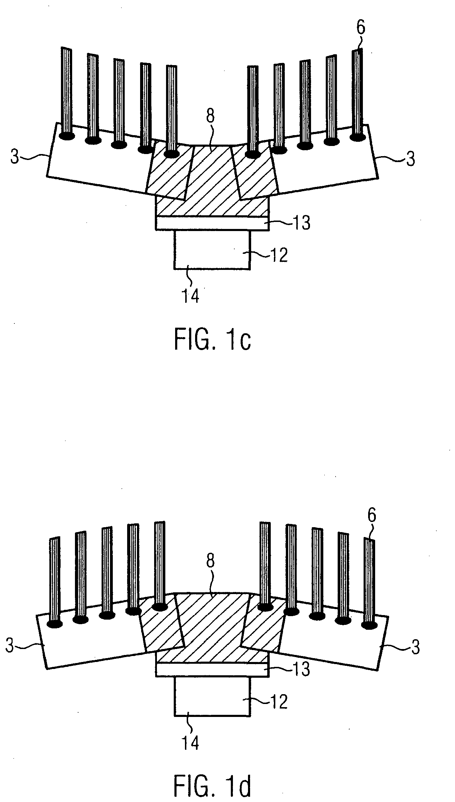

- Figur 1c: eine schematische Seitenansicht eines zweiten Ausführungsbeispiels mit einem konkav ausgestalteten Reinigungselementträger;
- Figur 1d: eine schematische Seitenansicht eines dritten Ausführungsbeispiels mit einem konvex ausgestalteten Reinigungselementträger; und

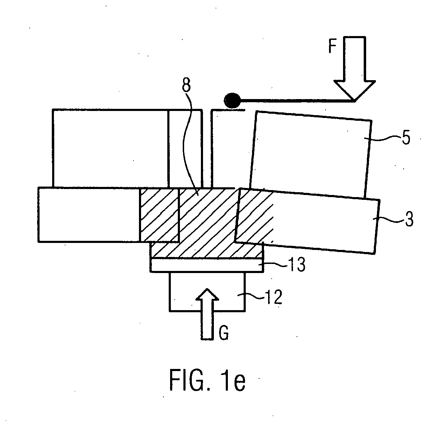

- Figur 1e: eine Seitenansicht des in Figur 1a dargestellten Ausführungsbeispiels an einer zu pflegenden Oberfläche anliegend (Arbeitsstellung).

Figur 1a zeigt einen Bürstenkopf einer Gesichtspflegebürste in Aufsicht entlang einer zentralen Achse senkrecht zu einer reinigungselementseitigen Oberfläche. Ein Reinigungselementträger 1 wird aus acht symmetrisch zueinander ausgerichteten Reinigungselementträgerteilen 3 gebildet, die für sich jeweils eine kreissegmentartige Grundfläche aufweisen. Auf einer reinigungselementseitigen Oberfläche sind Reinigungselementaufnahmeöffnungen 5 vorgesehen, in welche im vorliegenden Fall einzelne Borstenbündel 6 eingesteckt und gehalten sind (in den Figuren sind diese Reinigungselemente 6 nur schematisch gezeigt).

In Aufsicht mittig bzw. zentral zwischen den Reinigungselementträgerteilen 3 ist ein elastisches Kunststoffteil 8 vorgesehen, das in Aufsicht im Wesentlichen eine zylindrische Form aufweist und von dem sternförmige Arme 9a abgehen, die in zwischen den Reinigungselementträgerteilen 3 gebildete Zwischenräume ragen. Eine Außenumfangsfläche des Kunststoffteils 8 entspricht der Geometrie einer Außenumfangsfläche des Reinigungselementträgers 1.

Wie in der in Figur 1b dargestellten Seitenansicht zu erkennen, sind die einzelnen Reinigungselementträgerteile 3 von vier Seiten (mit Ausnahme der reinigungselementseitigen Oberfläche und der Außenumfangsfläche) formschlüssig, durch Anspritzen des elastischen Kunststoffteils 8 gehalten.

Die einzelnen Reinigungselementträgerteile 3 sind an deren zum Zentrum hinweisenden Enden, die für sich jeweils leicht abgerundet sind (vgl. Figur 1a), innerhalb des elastischen Kunststoffteils 8 gehalten. Die einzelnen Reinigungselementträgerteile 3 sind über einen Zwischenraum 9 voneinander beabstandet, der zum Teil von elastischem Kunststoffmaterial aufgefüllt ist. Mit anderen Worten ragen von dem elastischen Kunststoffteil 8 abgehende Arme 9b jeweils radial nach außen in den jeweiligen Zwischenraum 9 hinein. Die Arme 9a erstrecken sich nur über etwa ein Viertel bis ein Drittel der radialen Länge der Zwischenräume 9.

Das elastische Kunststoffteil 8 ist im Wesentlichen oberflächenbündig mit der reinigungselementseitigen Oberfläche des Reinigungselementträges 1 ausgebildet (vgl. Seitenansicht gemäß Figur 1b). Im Wesentlichen sind auch alle Reinigungselementträgerteile 3 für sich in Bezug auf die reinigungselementseitige Oberfläche höhengleich angeordnet.

Auf der der reinigungselementseitigen Oberfläche entgegengesetzten Seite überragt das elastische Kunststoffteil 8 eben diese der reinigungselementseitigen Oberflächen entgegengesetzte Seite und ist mit einem Basisteil 12 verbunden, welches einen scheibenartigen Flansch 13 aufweist, von dem rückseitig ein zu einem nicht dargestellten Bürstengrundkörper gerichteter zylindrischer Anschlussflansch 14 abgeht.

Sowohl die Reinigungselementträgerteile 3 als auch das Basisteil 12 sind aus einer Hartkunststoffkomponente hergestellt, wohingegen das elastische Kunststoffteil 8 aus einer Weichkunststoffkomponente, vorliegend TPE, hergestellt ist.

Wie schematisch in Figur 1b zu erkennen, sind die Reinigungselementträgerteile 3 demnach relativ zueinander beweglich gelagert. Durch eine mit dem in Figur 1c mit dem Pfeil F dargestellte Druckkraft auf das (in diesem Fall rechte) Reinigungselement 3, (beispielsweise bei Gebrauch der Bürste von einem Körperteil ausgeübt) und eine auf das Basisteil ausgeübte, mit dem Pfeil G angedeutete Gegenkraft findet eine Verkippung des jeweiligen Reinigungselementträgers 1 und damit eine Konturabformung der zu reinigenden Oberfläche bei Betrieb der Bürste statt. Wird die Bürste über die zu reinigende Region, insbesondere über das Gesicht bewegt, bewegen sich die Reinigungselementträgerteile 3 derart, dass die zu reinigende Kontur relativ präzise abgefahren werden kann.

Die in den Figuren gezeigten Ausführungsbeispiele werden in einem Drei-Komponenten-Spritzgießverfahren hergestellt. Die Reinigungselementträgerteile 3 sind aus einer ersten Kunststoffkomponente, der Basisteil 12 aus einer zweiten Kunststoffkomponente und der elastische Kunststoffteil 8 aus einer dritten Komponente gebildet.

Vorzugsweise werden in einer ersten Spritzgussstation, die eine erste Spritzgussform enthält, die einzelnen Reinigungselementträgerteile 3 hergestellt. In dieser ersten Spritzgussstation wird vorliegend auch zeitgleich mit der Spritzgussherstellung des jeweiligen Reinigungselementträgerteils die Befestigung der Borstenbündel 6 an den Reinigungselementträgerteilen 3 durchgeführt. Die so vorgefertigten Teile werden nachfolgend an eine zweite Spritzgussstation übergeben und in einer in dieser vorgesehenen Anspritzeinrichtung mit dem elastischen Kunststoffteil 8 versehen, welches, wie in der allgemeinen Beschreibung erläutert, im Zuge des Spritzgießens in der zweiten Station hergestellt und mit den Reinigungselementträgerteilen 3 und dem Basisteil 12 verbunden wird.

Das Basisteil 12 wird mittels Spritzgießen in einer dritten Station ausgeformt und gleichzeitig in der zweiten Spritzgussstation mit dem elastischen Kunststoffteil 8 mittels Anspritzen verbunden.

In der zweiten Station werden die Reinigungselementträgerteile 3 mitsamt den an diesen befestigten Borstenbündeln 6 und das Basisteil 12 in der im Nichtgebrauchszustand der Bürste vorgegebenen Ausrichtung zueinander gehalten und innerhalb einer Kavität gehalten, in welche nachfolgend ein elastischer Kunststoff, im vorliegenden Fall TPE, eingespritzt wird und damit das elastische Kunststoffteil 8 bildet. Anschließend wird der so vorgefertigte Bürstenkopf aus der dritten Station der Spritzgussstraße freigegeben.

In dem in Figur 1b gezeigten Ausführungsbeispiel sind zwei unterschiedliche Arten der Befestigung von als Reinigungselemente dienenden Borstenbündeln 6 dargestellt. Auf der in Figur 1b linken Seite sind die Borstenbündel 6 mittels Ankertechnologie befestigt, wohingegen die Borstenbündel 6 auf der in Figur 1b gezeigten rechten Seite mittels Umspritzen an deren befestigungsseitigen Enden gehalten werden. In diesem Fall werden die Borstenbündel, während das Reinigungselementträgerteil im Zuge des Spritzgießens hergestellt wird, an diesem befestigt.

Auf der rechten Seite in Figur 1b ist schematisch eine noch nicht mit einem Borstenbündel befüllte Reinigungselementaufnahmeöffnung 5a gezeigt, in die ein nicht dargestellter Anker zur Befestigung eines Borstenbündels 6 geschossen wird.

Üblicherweise werden beide Befestigungsmethoden alternativ verwendet, so dass die Reinigungselementträger entweder lediglich Borstenbündel 6, die mittels Ankertechnologie befestigt sind, enthalten oder aber lediglich Borstenbündel 6, die mittels Spritzgusstechnologie durch Umspritzen befestigt sind.

Figur 1c zeigtein Ausführungsbeispiel bei dem, anders als in dem in Figuren 1a, b und e dargestellten Ausführungsbeispiel der Reinigungselementträger 1 in dessen Ausgangsstellung nicht planar ausgebildet ist, sondern eine konkave Geometrie aufweist. einzelnen Reinigungselementträgerteile 3 sind an sich planar ausgebildet, jedoch verkippt in dem elastischen Kunststoffteil 8 gehalten, d. h. während des Umspritzens schon verkippt zueinander ausgerichtet. Die Borstenbündel 6 sind jeweils zu einer zentralen in den Figuren nicht dargestellten Mittelachse, die in der Zeichenebene senkrecht durch das elastische Kunststoffteil 8 verläuft, ausgerichtet. Deshalb sind die Reinigungselementaufnahmeöffnungen 5 schräg in den Reinigungselementträgerteilen 3 ausgerichtet. Alle Borstenbündel 6 sind direkt umspritzt gehalten und nicht mittels Ankertechnologie im jeweiligen Reinigungselementträgerteil 3 befestigt.

In Figur 1d ist ein weiteres Ausführungsbeispiel gezeigt. Im Unterschied zu dem Ausführungsbeispiel aus Figur 1c weist der Reinigungselementträger 1 eine konkave Geometrie in dessen Ausgangsstellung auf.

Bei den in den Figuren 1c bzw. d gezeigten Ausführungsbeispielen verkippendie einzelnen Reinigungselementträgerteile aus deren dort gezeigten Ausgangsstellung in die Arbeitsstellung um an einer zu reinigenden Oberfläche zu Anlage zu kommen.

### Bezugszeichenliste

- 1: Reinigungselementträger
- 3: Reinigungselementträgerteil
- 5, 5a: Reinigungselementaufnahmeöffnung
- 6: Borstenbündel/Reinigungselemente
- 8: elastischer Kunststoffteil/Rückstellmittel
- 9: Zwischenraum
- 9a: Arm/Polster
- 12: Basisteil
- 13: scheibenartiger Flansch
- 14: Anschlussflansch

## Patentansprüche

1. Körperpflegebürste, insbesondere Gesichtsbürste mit einem Bürstenkopf, der einen Reinigungselemente (6) tragenden Reinigungselementträger (1) enthält,
der aus zumindest zwei zueinander beweglich gelagerten Reinigungselementträgerteilen (3) gebildet ist, die Reinigungselemente (6) tragen und die an ein Basisteil (12) gekoppelt sind, der auf einer den Reinigungselementen (6) abgewandten Seite des Reinigungselementträgers (1) angeordnet ist,
wobei
zwischen den Reinigungselementträgerteilen (3) als Rückstellmittel (8) ein elastisches Kunststoffteil (8) vorgesehen ist, über welches die Reinigungselementträgerteile (3) an den Basisteil (12) gekoppelt sind,
der Basisteil (12) zentrisch zu dem Reinigungselementträger (1) angeordnet ist,
die Reinigungselementträgerteile (3) jeweils eine kreissegmentförmige Grundfläche aufweisen und die Reinigungselementträgerteile (3) einen im wesentlichen kreisförmigen Reinigungselementträger (1) ausbilden,
die Reinigungselementträgerteile (3) über einen Zwischenraum (9) voneinander beabstandet sind und
das elastische Kunststoffteil (8) sternförmig abgehende Arme aufweist, die sich in radialer Richtung nach außen in den Zwischenraum (9) erstrecken und in der Aufsicht jeweils 10 % bis 50 % des Zwischenraums (9) in radialer Richtung ausfüllen.

2. Körperpflegebürste nach Anspruch 1, **dadurch gekennzeichnet, dass** das elastische Kunststoffteil (8) an die Reinigungselementträgerteile (3) angespritzt ist.

3. Körperpflegebürste nach einem der vorhergehenden Ansprüche, **dadurch gekennzeichnet, dass** zumindest ein Reinigungselement (6) als TPE Element ausgebildet ist und/oder zumindest ein Reinigungselement (6) als Borstenbündel (6) ausgebildet ist.

4. Körperpflegebürste nach einem der vorhergehenden Ansprüche, **dadurch gekennzeichnet, dass** zumindest ein Reinigungselementträgerteil (3) durch einen mittels Spritzgießen hergestellten und mit zumindest einer Reinigungselementaufnahmeöffnung (5) versehenen Grundkörper gebildet ist, und dass eines der Reinigungselemente (6) über einen Anker in dem Reinigungselementträgerteil (3) befestigt ist.

5. Körperpflegebürste nach einem der vorhergehenden Ansprüche, **dadurch gekennzeichnet, dass** an dem Reinigungselementträger (1) zumindest ein Reinigungselement (6) durch Umspritzen gehalten ist.

6. Körperpflegebürste nach einem der vorhergehenden Ansprüche, **dadurch gekennzeichnet, dass** an dem Basisteil (12) eine Nabe zur Aufnahme einer Antriebswelle vorgesehen ist.

7. Körperpflegebürste nach einem der vorhergehenden Ansprüche, **dadurch gekennzeichnet, dass** dem Bürstenkopf ein Elektroantrieb zur Rotations- oder Oszillationsbewegung des Reinigungselementträgers (1) zugeordnet ist, welcher an das Basisteil (12) angeschlossen ist.

8. Verfahren zur Herstellung einer Körperpflegebürste nach einem der Ansprüche 1 bis 7 mit den Schritten:
a) Herstellen von Reinigungselementträgerteilen (3) in einer ersten Spritzgussform und zumindest teilweises Entformen der Reinigungselementträgerteile (3);
b) Herstellen eines Basisteils (12) in einer zweiten Spritzgussform;
c) Transfer der in Verfahrensschritt a) hergestellten Reinigungselementträgerteile (3) und des in Verfahrensschritt b) hergestellten Basisteils (12) in eine Anspritzeinrichtung und Zusammensetzen der Reinigungselementträgerteile (3) und des Basisteils (12) in einer vorgegebenen Ausrichtung zueinander zu einem Bürstenkopfensemble;
d) Anspritzten eines elastischen Kunststoffteiles (8) an die zu einem Reinigungselementträger (1) zusammengesetzten Reinigungselementträgerteile (3) und das Basisteil (12) derart, dass ein das elastische Kunststoffteil (8) ausbildendes Kunststoffmaterial zwischen benachbarte Reinigungselementträgerteile und zwischen die Reinigungselementträgerteile (3) und den Basisteil (12) gelangt.

## Claims

1. A body care brush, in particular a facial brush having a brush head which contains a cleaning-element carrier (1) that bears cleaning elements (6), the cleaning-element carrier being formed by at least two cleaning-element carrier parts (3) which are movably supported in relation to each other and which bear cleaning elements (6) and are coupled to a base part (12) which is arranged at a side of the cleaning-element carrier (1) facing away from the cleaning elements (6),
wherein
an elastic plastic member (8) is provided between the cleaning-element carrier parts (3) as returning means (8) via which the cleaning-element carrier parts (3) are coupled to the base part (12),
the base part (12) is arranged centrally with respect to the cleaning-element carrier (1),
the cleaning-element carrier parts (3) each comprise a circular segment-shaped base surface and the cleaning-element carrier parts (3) form an essentially circular cleaning-element carrier (1),
the cleaning-element carrier parts (3) are spaced apart from one another via a clearance (9), and
the elastic plastic member (8) has arms which extend in star shape and in radial direction outwards into the clearance (9) and, in plan view, each fill 10% to 50% of the clearance (9) in the radial direction.

2. The body care brush according to claim 1, **characterized in that** the elastic plastic member (8) is injected to the cleaning-element carrier parts (3).

3. The body care brush according to any one of the preceding claims, **characterized in that** at least one cleaning element (6) is formed as a TPE element and/or at least one cleaning element (6) is formed as a bristle bundle (6).

4. The body care brush according to any one of the preceding claims, **characterized in that** at least one cleaning-element carrier part (3) is formed of a base body, which is produced by means of injection-molding and which is provided with at least one cleaning-element receiving opening (5), and that one of the cleaning elements (6) is fastened via an anchor in the cleaning-element carrier part (3).

5. The body care brush according to any one of the preceding claims, **characterized in that** at least one cleaning element (6) is held at the cleaning-element carrier (1) by overmolding.

6. The body care brush according to any one of the preceding claims, **characterized in that** a hub is provided at the base part (12) for receiving a drive shaft.

7. The body care brush according to any one of the preceding claims, **characterized in that** an electric drive for rotating or oscillating movement of the cleaning-element carrier (1) is assigned to the brush head, which is connected to the base part (12).

8. A method for producing a body care brush according to any one of claims 1 to 7, comprising the steps of:
a) producing cleaning-element carrier parts (3) in a first injection mold and at least partial demolding of the cleaning-element carrier parts (3);
b) producing a base part (12) in a second injection mold;
c) transferring the cleaning-element carrier parts (3) produced in method step a) and the base part (12) produced in method step b) into an injection device and assembling the cleaning-element carrier parts (3) and the base part (12) in a given orientation in relation to one another to form a brush head assembly;
d) injecting an elastic plastic part (8) to the cleaning-element carrier parts (3), which are assembled to form a cleaning-element carrier (1), and the base part (12) in such a manner that a plastic material forming the elastic plastic member (8) passes between neighboring cleaning-element carrier parts and between the cleaning-element carrier parts (3) and the base part (12).

## Revendications

1. Brosse de soin corporel, notamment brosse pour visage, comprenant une tête de brosse qui comporte un support (1) d'éléments de nettoyage supportant des éléments de nettoyage (6) qui est formé d'au moins deux parties (3) de support d'éléments de nettoyage montées de manière mobile l'une par rapport à l'autre, qui portent des éléments de nettoyage (6) et qui sont reliées à une partie de base (12) qui est située sur un côté du support (1) d'éléments de nettoyage éloigné des éléments de nettoyage (6),
dans laquelle
une partie en matière plastique élastique (8) par le biais de laquelle les parties (3) de support d'éléments de nettoyage sont reliées à la partie de base (12) est prévue en tant que moyen de rappel (8) entre les parties (3) de support d'éléments de nettoyage,
la partie de base (2) est centrée par rapport au support (1) d'éléments de nettoyage,
les parties (3) de support d'éléments de nettoyage ont chacune une surface en forme de segment de cercle et les parties (3) de support d'éléments de nettoyage constituent un support (1) d'éléments de nettoyage essentiellement circulaire,
les parties (3) de support d'éléments de nettoyage sont espacées les unes des autres par un espace intermédiaire (9), et
la partie en matière plastique élastique (8) comprend des bras partant en forme d'étoile qui s'étendent dans l'espace intermédiaire (9) dans la direction radiale vers l'extérieur et, en vue de dessus, remplissent à chaque fois de 10% à 50% de l'espace intermédiaire (9) dans la direction radiale.

2. Brosse de soin corporel selon la revendication 1, **caractérisée en ce que** la partie en matière plastique élastique (8) est moulée par injection sur les parties (3) de support d'éléments de nettoyage.

3. Brosse de soin corporel selon l'une des revendications précédentes,
**caractérisée en ce qu'**au moins un élément de nettoyage (6) est réalisé en tant qu'élément en TPE et/ou au moins un élément de nettoyage (6) est réalisé en tant que faisceau de poils (6).

4. Brosse de soin corporel selon l'une des revendications précédentes,
**caractérisée en ce qu'**au moins une partie (3) de support d'éléments de nettoyage est formée par un corps de base fabriqué par moulage par injection et pourvu d'au moins une ouverture (5) de réception d'éléments de nettoyage, et **en ce qu'**un des éléments de nettoyage (6) est fixé dans la partie (3) de support d'éléments de nettoyage par le biais d'un ancrage.

5. Brosse de soin corporel selon l'une des revendications précédentes,
**caractérisée en ce qu'**au moins un élément de nettoyage (6) est maintenu enrobé par moulage par injection sur le support (1) d'éléments de nettoyage.

6. Brosse de soin corporel selon l'une des revendications précédentes,
**caractérisée en ce qu'**un moyeu destiné à recevoir un arbre d'entraînement est prévu sur la partie de base (12).

7. Brosse de soin corporel selon l'une des revendications précédentes,
**caractérisée en ce qu'**un entraînement électrique permettant un mouvement de rotation ou d'oscillation du support (1) d'éléments de nettoyage, qui est relié à la partie de base (12), est associé à la tête de brosse.

8. Procédé de fabrication d'une brosse de soin corporel selon l'une des revendications 1 à 7, comprenant les étapes de :
a) fabrication de parties (3) de support d'éléments de nettoyage dans un premier moule de moulage par injection et démoulage, au moins partiel, des parties (3) de support d'éléments de nettoyage ;
b) fabrication d'une partie de base (12) dans un second moule de moulage par injection ;
c) transfert des parties (3) de support d'éléments de nettoyage fabriquées dans l'étape de procédé a) et de la partie de base (12) fabriquée dans l'étape de procédé b) dans un dispositif de moulage par injection et assemblage des parties (3) de support d'éléments de nettoyage et de la partie de base (12) dans une orientation prédéfinie les unes par rapport aux autres pour former un ensemble tête de brosse ;
d) moulage par injection d'une partie en matière plastique élastique (8) sur les parties (3) de support d'éléments de nettoyage assemblées en support (1) d'éléments de nettoyage et la partie de base (12) de façon qu'une matière plastique formant la partie en matière plastique élastique (8) s'introduise entre des parties de support d'éléments de nettoyage contigües et entre les parties (3) de support d'éléments de nettoyage et la partie de base (12).
